# EUROPÄISCHE PATENTSCHRIFT

(11) **EP 2 114 710 B1**
(45) Veröffentlichungstag und Bekanntmachung des Hinweises auf die Patenterteilung: **19.01.2011**
(21) Anmeldenummer: 08707631.1
(22) Anmeldetag: 08.02.2008
(51) Int. Cl.: B60J 5/06, E05D 15/10, E05F 15/14

(54) **SCHIEBETÜRE FÜR EIN KRAFTFAHRZEUG**
SLIDING DOOR FOR A MOTOR VEHICLE
PORTE COULISSANTE POUR UN VÉHICULE À MOTEUR

(30) Priorität: 08.02.2007 DE 102007006358
(43) Veröffentlichungstag der Anmeldung: 11.11.2009
(73) Patentinhaber: DURA Automotive Body & Glass Systems GmbH, 58840 Plettenberg (DE)
(72) Erfinder: HEUEL, Gerhard, 57462 Olpe (DE); TILLMANN, Peter, 58840 Plettenberg (DE); ROTTMANN, Ralf, 57489 Drolshagen (DE)
(74) Vertreter: Zinnecker, Armin
(86) Internationale Anmeldenummer: PCT/EP2008/000986
(87) Internationale Veröffentlichungsnummer: WO 2008/095728

(56) Entgegenhaltungen:
- EP-A- 0 644 074
- EP-A- 1 721 768
- GB-A- 738 486

## Beschreibung

Die Erfindung betrifft eine Schiebetüre für ein Fahrzeug, insbesondere für ein Kraftfahrzeug, die an ihrer Innenseite eine Führungsschiene aufweist, die in einem Gleitschlitten längsverschieblich gelagert ist.

Eine derartige Schiebetüre ist aus der EP 1 721 768 A1 bekannt.

Aus der DE 199 21 877 A1 ist eine Schiebetüre für ein Fahrzeug bekannt, bei der die Führungsschiene an der Karosserie vorgesehen und durch eine schwenkbare Abdeckung abdeckbar ist.

Aus der GB 738 486 A ist eine Schiebetüre nach dem Oberbegriff des Anspruchs 1 bekannt.

Aufgabe der Erfindung ist es, eine verbesserte Schiebetüre für ein Fahrzeug vorzuschlagen.

Erfindungsgemäß wird diese Aufgabe durch die kennzeichnenden Merkmale des Anspruchs 1 gelöst. Die Schiebetüre ist durch eine Abdeckung für die Führungsschiene gekennzeichnet. Dadurch, daß für die Führungsschiene eine Abdeckung vorgesehen ist, kann eine homogene Türinnenverkleidung erzeugt werden.

Die Abdeckung ist als Jalousie oder Rollo ausgebildet.

Die Abdeckung ist mit dem Gleitschlitten verbunden. Durch eine Bewegung des Gleitschlittens wird die Abdeckung mitbewegt.

Vorteilhaft ist es, wenn die Abdeckung mit dem Gleitschlitten lösbar verbunden ist.

Die Abdeckung weist eine Verzahnung auf. Die Verzahnung der Abdeckung greift in eine entsprechende Verzahnung, die an dem Gleitschlitten vorgesehen ist, ein. Hierdurch kann die Montage der Abdeckung vereinfacht werden.

Vorteilhafte Weiterbildungen sind in den Unteransprüchen beschrieben.

Vorteilhaft ist es, wenn die Abdeckung aus Kunststoff hergestellt ist. Die Abdeckung kann aus 1-Komponenten-Kunststoff (1K) hergestellt sein. Es ist allerdings auch möglich, die Abdeckung aus einem 2-Komponenten-Kunststoff (2K) herzustellen. Besonders geeignete Kombinationen für 2K-Kunststoffe sind ABS und TPE. Ferner ist die Kombination von ABS und SEBS besonders geeignet. Ferner können 2K-Kunststoffe verwendet werden, bei denen eine Komponente von einer Dekorfolie gebildet wird. Die Dekorfolie kann insbesondere ein Holzdekor oder ein Aluminiumdekor tragen. Nach einer weiteren vorteilhaften Weiterbildung kann das Material der Abdeckung, insbesondere das Kunststoffmaterial der Abdeckung, mit einem Bezug aus insbesondere Stoff oder Leder versehen sein. Für die Abdeckung besonders geeignet sind 2-Komponenten-Kunststoffe, aber auch andere Materialien wie beispielsweise verstärkte Folien.

Eine weitere vorteilhafte Weiterbildung ist **dadurch gekennzeichnet, daß** die Abdeckung in Führungen geführt ist. Die Führungen können an der Schiebetüre vorgesehen sein. Vorzugsweise ist eine obere und eine untere Führungsbahn vorhanden.

Die Führungen können an der Innenverkleidung der Schiebetüre befestigt sein. Die Befestigung kann lösbar oder dauerhaft erfolgen. Insbesondere können die Führungen bzw. Führungsbahnen mit der Schiebetüre bzw. deren Innenverkleidung verklebt sein.

Vorteilhaft ist es, wenn ein Motor zum Antrieb der Führungsschiene vorhanden ist. Dabei kann es sich um einen Elektromotor und/oder einen Getriebemotor handeln. Der Motor ist vorzugsweise an dem Gleitschlitten vorgesehen. Durch den Motor kann die Führungsschiene relativ zum Gleitschlitten angetrieben werden.

Eine weitere vorteilhafte Weiterbildung ist **dadurch gekennzeichnet, daß** der Gleitschlitten an einem Scharnierbügel schwenkbar gelagert ist, der an dem Fahrzeug schwenkbar gelagert ist.

Vorteilhaft ist es, wenn ein Motor zum Antrieb des Scharnierbügels vorgesehen ist. Der Motor ist vorzugsweise an dem Fahrzeug bzw. Kraftfahrzeug vorgesehen. Es kann sich um einen Elektromotor und/oder um einen Getriebemotor handeln. Durch den Motor kann der Scharnierbügel verschwenkt werden.

Eine weitere vorteilhafte Weiterbildung ist **dadurch gekennzeichnet, daß** die Schiebetüre an dem dem Scharnierbügel abgewandten Ende an dem Fahrzeug arretierbar ist. Vorzugsweise ist die Schiebetüre in der Weise arretierbar, daß an der Arretierungsstelle bei einer Verschwenkung des Scharnierbügels ein Längenausgleich und eine Drehbarkeit ermöglicht werden.

Dies ist vorzugsweise dadurch erreichbar, daß an dem Fahrzeug ein Scharnierbolzen für eine Scharnierkulisse an der Schiebetüre vorgesehen ist. Die Anordnung kann auch in umgekehrter Weise getroffen sein: Dann ist der Scharnierbolzen an der Schiebetüre vorgesehen, und die Scharnierkulisse ist an dem Fahrzeug vorgesehen. Vorzugsweise handelt es sich um eine offene Scharnierkulisse, in die der Scharnierbolzen eindringen kann und die der Scharnierbolzen verlassen kann. Besonders geeignet sind U-förmige Scharnierkulissen. Der Scharnierbolzen und die Scharnierkulisse sind vorzugsweise derart angeordnet und aufeinander abgestimmt, daß sie die Schiebetüre in die Schließstellung führen.

Die Erfindung betrifft ferner ein Fahrzeug, insbesondere ein Kraftfahrzeug, das durch eine erfindungsgemäße Schiebetüre gekennzeichnet ist.

Ein Ausführungsbeispiel der Erfindung wird nachstehend anhand der beigefügten Zeichnung im einzelnen erläutert. In der Zeichnung zeigt
- Fig. 1: einen Teil einer Karosserie eines Kraftfahrzeugs mit einer teil- weise geöffneten Schiebetüre in einer Seitenansicht,
- Fig. 2: die Karosserie gemäß Fig. 1 in einer Ansicht von oben,
- Fig. 3: die Schiebetüre gemäß Fig. 1 und 2 im geöffneten Zustand in einer Seitenansicht,
- Fig. 4: die Schiebetüre gemäß Fig. 3 in einer Ansicht von oben,
- Fig. 5: den Scharnierbügel und die diesem zugeordneten Bauteile in einer perspektivischen Ansicht,
- Fig. 6: die Bauteile gemäß Fig. 5, allerdings ohne einige Karosserie- bauteile,
- Fig. 7: den Gleitschlitten und die ihm zugeordneten Bauteile in einer perspektivischen Ansicht,
- Fig. 8: die Bauteile gemäß Fig. 7, allerdings ohne einige Teile des Gleitschlittens,
- Fig. 9: die Schiebetüre in einer Ansicht von innen,
- Fig. 10: einen Vertikalschnitt durch die Schiebetüre gemäß Fig. 9,
- Fig. 11: die Schiebetüre gemäß Fig. 9 und 10 mit einer Abdeckung für die Führungsschiene in einer Ansicht von innen und
- Fig. 12: die Schiebetüre gemäß Fig. 11 in einem Vertikalschnitt.

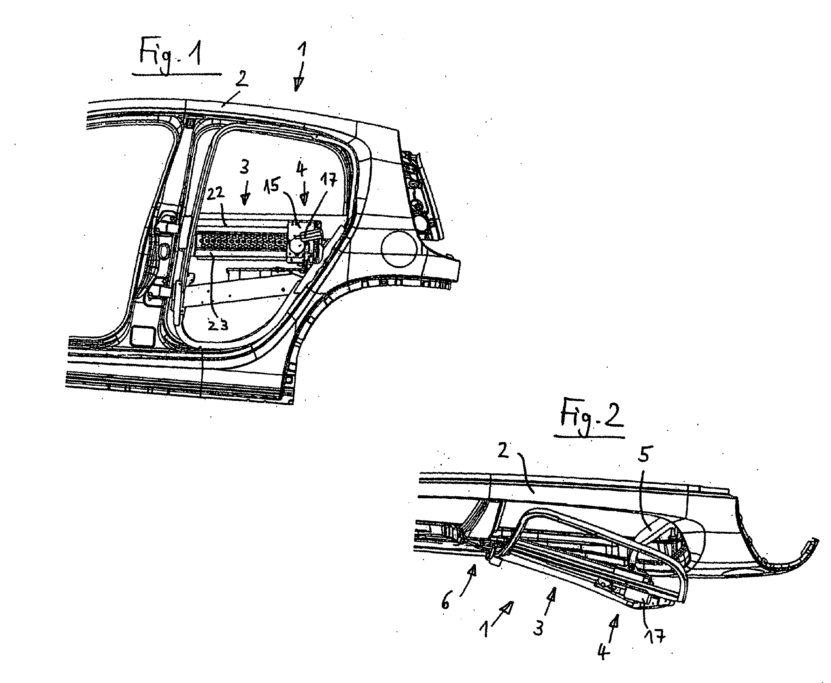

In Fig. 1 und 2 ist eine Schiebetüre 1 gezeigt, die gegenüber der Karosserie 2 eines Kraftfahrzeugs teilweise geöffnet ist. Die Schiebetüre 1 weist an ihrer Innenseite eine Führungsschiene 3 auf, die in einem Gleitschlitten 4 längsverschieblich gelagert ist.

An der Karosserie 2 ist ein Scharnierbügel 5 schwenkbar gelagert. Am anderen Ende des Scharnierbügels 5 ist der Gleitschlitten 4 schwenkbar gelagert.

Beim Öffnen der Schiebetüre 1 wird diese zunächst aus der geschlossenen Stellung (in der Zeichnung nicht dargestellt) in die teilweise geöffnete Stellung, die in Fig. 1 und 2 gezeigt ist, verschwenkt. Dies geschieht durch eine Verschwenkung des Scharnierbügels 5. Um diese Schwenkbewegung zu ermöglichen, ist an dem dem Scharnierbügel 5 gegenüberliegenden Ende der Schiebetüre 1, im dargestellten Ausführungsbeispiel also am vorderen Ende der Schiebetüre 1, eine U-förmige Scharnierkulisse 6 vorgesehen. Die U-förmige Scharnierkulisse 6 verläuft im wesentlichen parallel zur Fahrzeug-Längsrichtung. Sie ist an ihrem dem Scharnierbügel 5 abgewandten, im Ausführungsbeispiel also vorderen Ende offen. In die U-förmige Scharnierkulisse 6 greift ein Scharnierbolzen 7 ein, der im wesentlichen vertikal nach oben ragt. Durch den Scharnierbolzen 7 und die Scharnierkulisse 6 ist die Schiebetüre 7 an dem dem Scharnierbügel 5 abgewandten Ende an dem Fahrzeug arretierbar.

Wenn die Schiebetüre 1 vollständig geschlossen ist, liegt der Scharnierbolzen 7 innerhalb der U-förmigen Scharnierkulisse 6, und zwar im Abstand von deren Ende. Während der durch eine Verschwenkung des Scharnierbügels 5 erzeugten Öffnungsbewegung führt die Schiebetüre 1 eine Verschwenkung um den Scharnierbolzen 7 aus. Dabei gleitet die U-förmige Scharnierkulisse 6 relativ zum Scharnierbolzen 7 von diesem weg. In der in Fig. 1 und 2 gezeigten Stellung der Schiebetüre 1, in der die Schiebetüre 1 angestellt ist, befindet sich der Scharnierbolzen 7 am offenen Ende der U-förmigen Scharnierkulisse 6.

Bei der Schließbewegung wird die Schiebetüre 1 derart positioniert, daß das offene Ende der U-förmigen Scharnierkulisse 6 den Scharnierbolzen 7 aufnimmt. Hierdurch wird die Schließbewegung der Schiebetüre 1 bis zur vollständig geschlossenen Stellung ermöglicht.

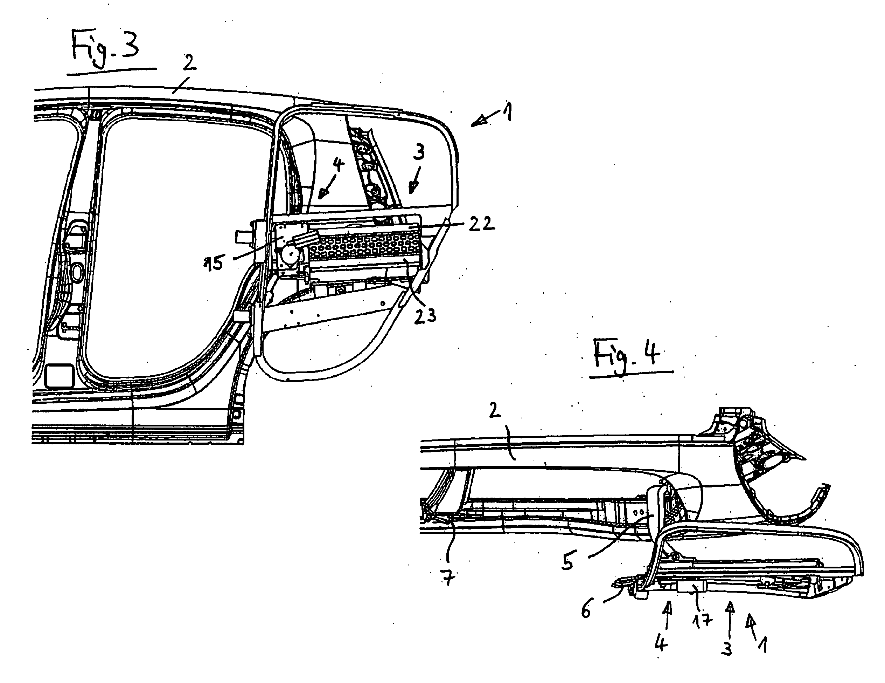

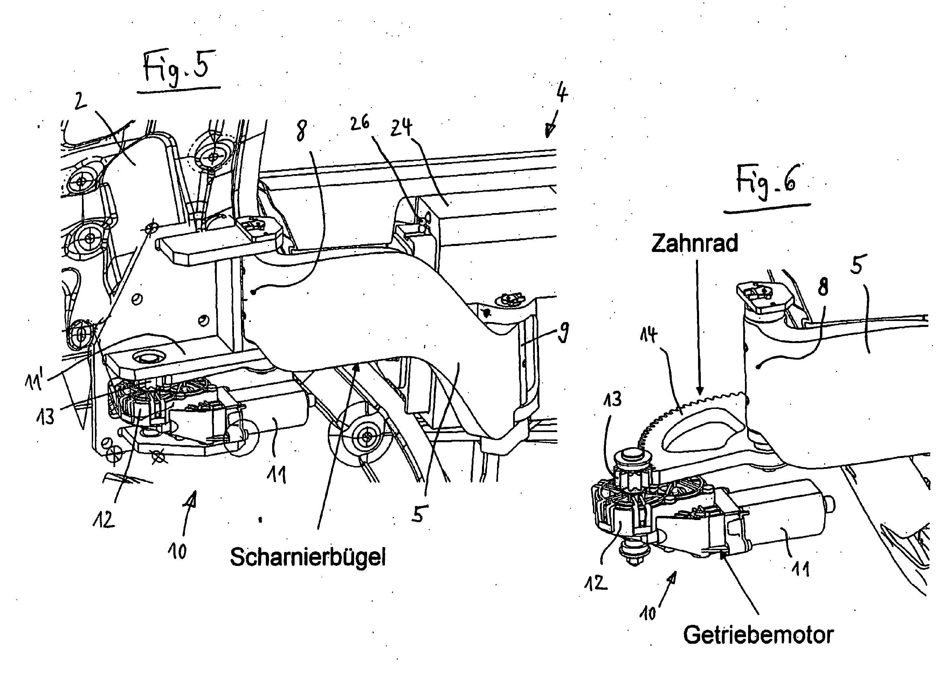

In Fig. 5 und 6 sind der Scharnierbügel 5 und die ihn umgebenden Teile vergrößert dargestellt. Der Scharnierbügel 5 ist an einem Teil der Karosserie 2 um eine im wesentlich vertikal verlaufende Achse 8 schwenkbar gelagert. Er ist an seinem anderen Ende um eine ebenfalls im wesentlichen vertikal verlaufende Achse 9 an dem Gleitschlitten 4 schwenkbar gelagert. Der Scharnierbügel 5 umfaßt ein Mitteilteil, das in der Ansicht von oben (Fig. 2 und 4) im wesentlichen gerade bzw. eben verläuft, das allerdings, wie insbesondere aus Fig. 5 ersichtlich, in der Richtung von der Karosserie 2 zum Gleitschlitten 4 schräg nach unten verläuft. Von dem Mittelteil des Scharnierbügels 5 knicken zwei Endteile, an deren Enden sich die Achsen 8, 9 befinden, in der Ansicht von oben (Fig. 2 und 4) ab, wobei das der Achse 8 zugewandte Ende um einen Winkel von etwa 90° abknickt und das der Achse 9 zugewandte Ende um einen Winkel von etwa 45° abknickt, so daß die Endteile in einem Winkel von etwa 135° zueinander stehen.

Zum Schwenkantrieb des Scharnierbügels 5 dient ein Getriebemotor 10, der an einem Winkelblech 11' an der C-Säule der Karosserie 2 befestigt ist. Der Getriebemotor 10 umfaßt einen Elektromotor 11, der ein Getriebe 12 antreibt, dessen vertikal verlaufende Ausgangswelle ein Zahnrad 13 trägt, das durch den Getriebemotor 10 antreibbar ist.

In Fig. 6 ist gegenüber der Darstellung in Fig. 5 das Winkelblech 11' weggelassen. Wie aus Fig. 6 ersichtlich, greift das Zahnrad 13 in ein Zahnrad 14 ein, das an dem Schwenkarm 5 vorgesehen ist. Das Zahnrad 14 ist um die Achse 8 schwenkbar gelagert. Es ist drehfest mit dem Schwenkarm 5 verbunden. Da der Schwenkarm 5 nur eine Drehung um etwa 90° ausführen muß, erstreckt sich auch das Zahnrad 14 nur über einen Winkelbereich von im wesentlichen 90°.

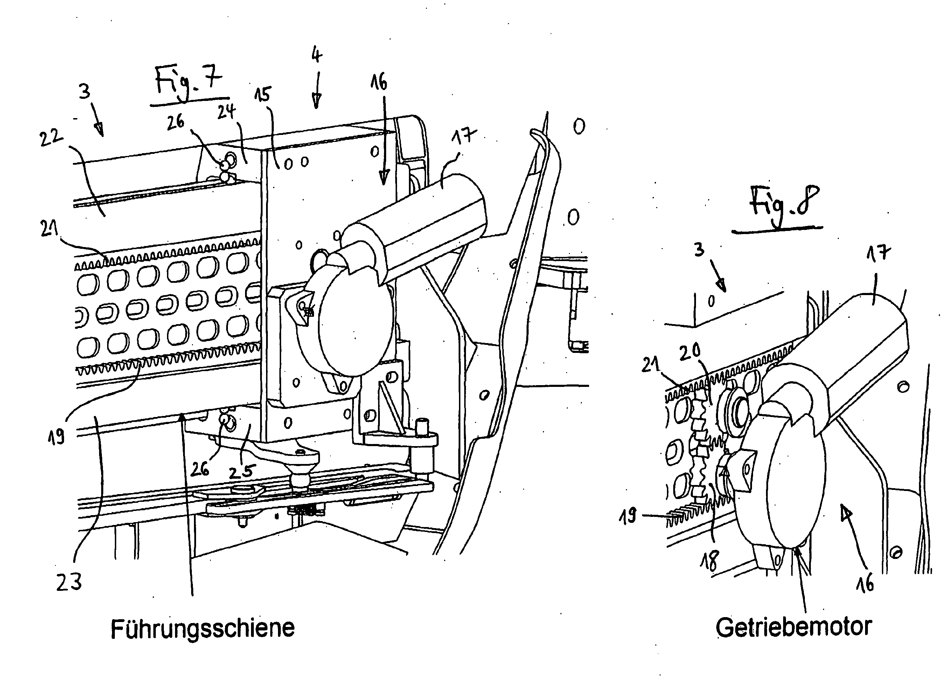

Wie aus Fig. 7 ersichtlich, ist an einer im wesentlichen vertikal verlaufenden Verbindungsplatte 15 des Gleitschlittens 4 ein Getriebemotor 16 befestigt, der zum Antrieb der Führungsschiene 3 dient. Der Getriebemotor 16 umfaßt einen Elektromotor 17, dessen im wesentlichen horizontal und parallel zur Führungsschiene 3 verlaufende Ausgangswelle ein Schneckenrad trägt, das ein Zahnrad antreibt, dessen Drehachse im wesentlichen horizontal und quer zur Führungsschiene 3 verläuft.

Dieses Zahnrad ist mit einem Zahnrad 18 verbunden, das in Fig. 8 zu sehen ist, da dort die Verbindungsplatte 15 des Gleitschlittens 4 weggelassen wurde. Das Zahnrad 18 greift in eine Zahnstange 19 ein, die an der Schiebetüre 1 vorgesehen ist. Die Zahnstange 19 verläuft parallel zu der Führungsschiene 3.

Das von dem Getriebemotor 16 angetriebene Zahnrad 18 greift ferner in ein weiteres Zahnrad 20 ein, das seinerseits in eine weitere Zahnstange 21 eingreift. Das angetriebene Zahnrad 20 hat denselben Durchmesser und dieselbe Zähnezahl wie das antreibende Zahnrad 18. Es ist an dem Gleitschlitten 4 um eine Achse drehbar gelagert, die zur Achse des antreibenden Zahnrads 18 parallel und von dieser beabstandet ist. Die weitere Zahnstange 21 verläuft parallel zu und im Abstand von der ersten Zahnstange 19. Die von dem Getriebemotor 16 in das antreibende Zahnrad 18 eingeleitete Drehbewegung versetzt das angetriebene Zahnrad 20 in eine gegenläufige Drehbewegung. Die gegenläufigen Drehungen der Zahnräder 18, 20 bewirken durch die Abstützung an den Zahnstangen 19, 21 eine lineare Bewegung der Führungsschiene 3 gegenüber dem Gleitschlitten 4.

Wie aus Fig. 7 ersichtlich, umfaßt die Führungsschiene 3 eine obere Führungsleiste 22 und eine untere Führungsleiste 23, deren äußere Enden von Führungsblöcken 24, 25 des Gleitschlittens 4 übergriffen werden. Die Gleitführung der Führungsleisten 22, 23 in den Führungsblöcken 24, 25 erfolgt durch Wälzlager 26.

Durch die Erfindung wird ein elektromechanisches Antriebssystem für eine Schiebetüre eines Fahrzeugs, insbesondere eines Kraftfahrzeugs, geschaffen, die zwei Antriebseinheiten umfassen kann, die jeweils unterschiedliche Funktionen übernehmen. Eine erste Antriebseinheit wird von dem Getriebemotor 10 und den diesem zugeordneten Bauteilen realisiert. Diese Antriebseinheit übernimmt die erste Öffnungsbewegung der Schiebetüre 1, also das "Anstellen" der Schiebetüre 1, wie beispielsweise in Fig. 1 und 2 gezeigt. Eine zweite Antriebseinheit wird von dem Getriebemotor 16 und den ihm zugeordneten Bauteilen gebildet. Diese Antriebseinheit übernimmt die "Linearbewegung" der Schiebetüre 2 bis zur vollständig geöffneten Stellung, die in Fig. 3 und 4 gezeigt ist, und wieder zurück. Die erste Antriebseinheit und die zweite Antriebseinheit können elektromechanisch derart miteinander verbunden werden, daß sich hieraus eine Öffnungsbewegung und die entgegengesetzte Schließbewegung ergibt.

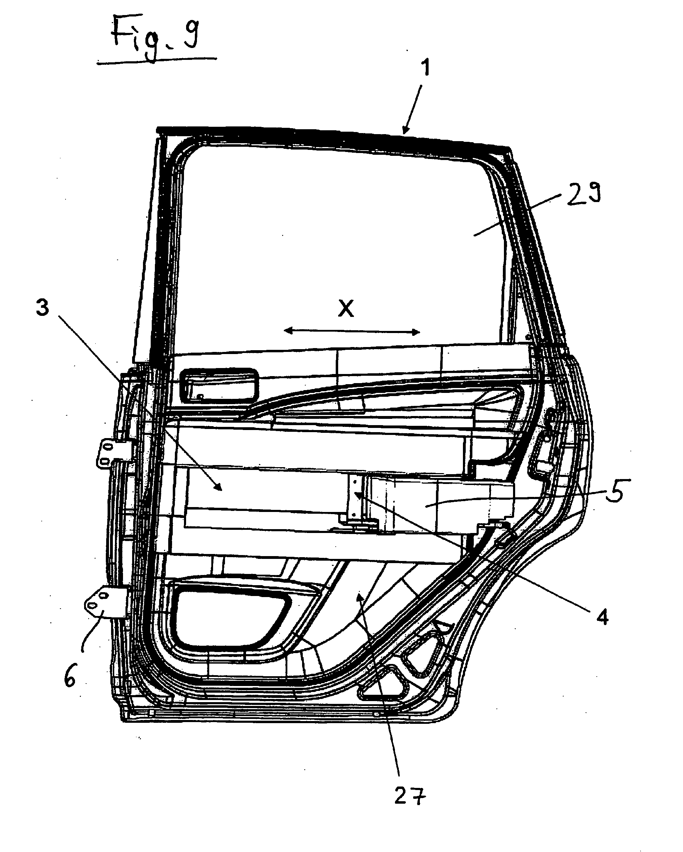

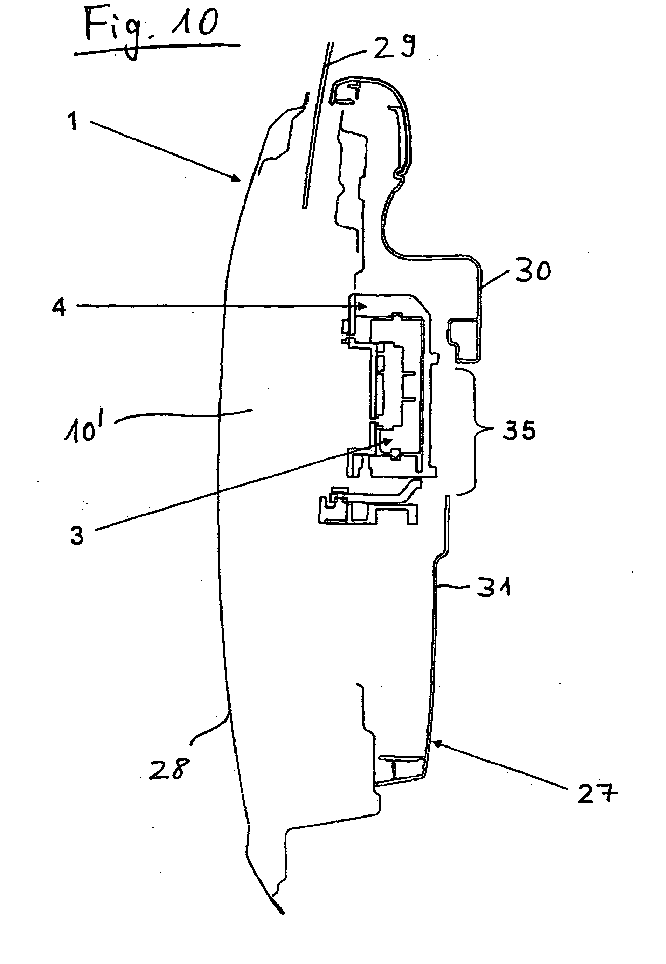

In Fig. 9 und 10 ist die Schiebetüre 1 in einer Ansicht von innen und in einem Vertikalschnitt gezeigt, wobei es sich allerdings nicht wie in Fig. 1 bis 4 um eine linke hintere Schiebetüre eines Kraftfahrzeugs handelt, sondern um eine rechte hintere Schiebetüre des Kraftfahrzeugs. Gleiche Teile sind mit gleichen Bezugszeichen versehen, so daß sie nicht erneut beschrieben werden müssen.

Die Schiebetüre 1 umfaßt eine Innenverkleidung 27, eine Außenhaut 28, eine Scheibe 29 und weitere Bauteile. Zwischen dem unteren Ende der oberen Innenverkleidung 30 und dem oberen Ende der unteren Innenverkleidung 31 befindet sich ein Freiraum 35, der für die Längsbewegung und Schwenkbewegung des Scharnierbügels 5 benötigt wird. Durch diesen Freiraum 35 in der Innenverkleidung 27 der Schiebetüre 1 wird ein freier Blick auf die Linearantriebseinheit ermöglicht, die die Führungsschiene 3 und den Gleitschlitten 4 umfaßt. Durch den Freiraum 35 können Schmutz oder Fremdkörper in den Innenbereich 10' der Schiebetüre 1 gelangen. Ferner besteht die Gefahr, daß Körperteile oder sonstige Gegenstände zwischen dem linear bewegten Gleitschlitten 4 und der Innenverkleidung 27 der Schiebetüre 1 eingeklemmt werden.

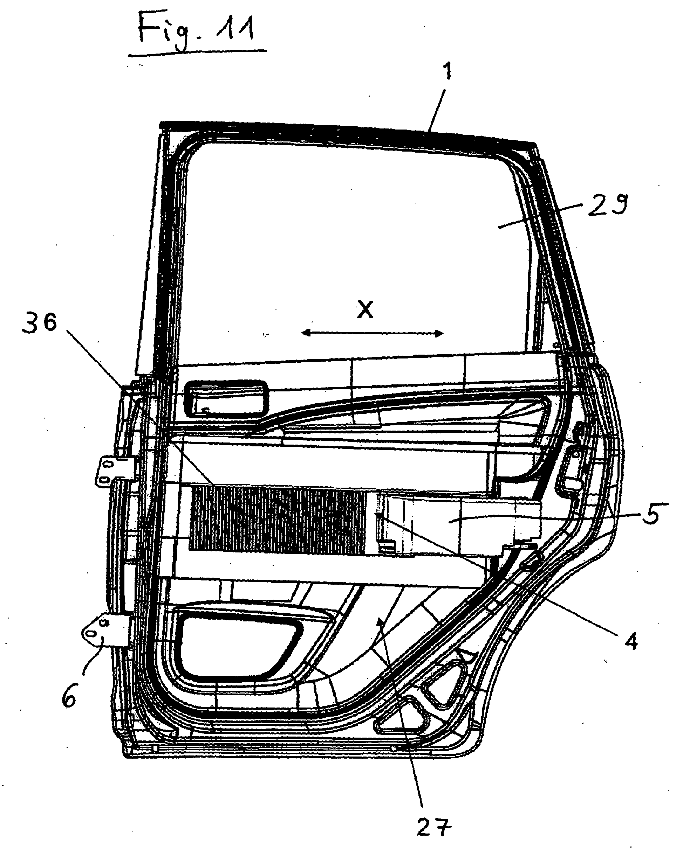

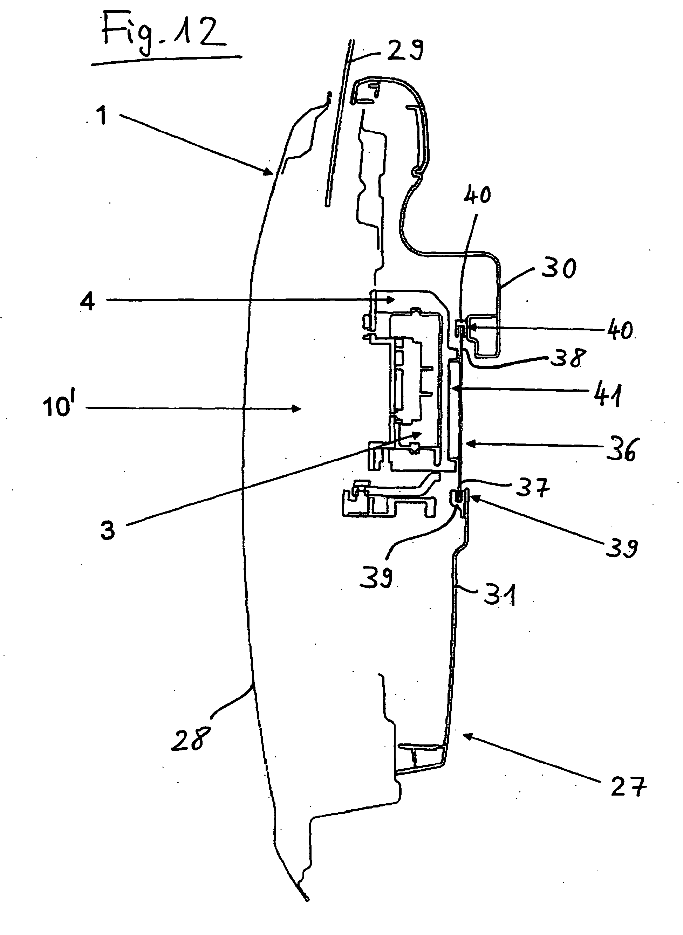

Wie aus Fig. 11 und 12 ersichtlich ist eine Abdeckung 36 für die Führungsschiene 3 vorgesehen. Durch die Abdeckung 36 wird der Freiraum 35 der Innenverkleidung 27 abgedeckt. Dies erfolgt durch das von der Abdeckung 36 gebildete zusätzliche innenliegende Bauteil.

Im Ausführungsbeispiel nach Fig. 11 und 12 ist die Abdeckung 36 als Jalousie ausgeführt. Sie besteht aus Kunststoff, vorzugsweise aus einem 2-Komponenten-Kunststoff.

Die Abdeckung umfaßt ein unteres Endstück 37 und ein oberes Endstück 38, die in entsprechenden Führungen geführt sind, nämlich in einer unteren Führungsbahn 39 und in einer oberen Führungsbahn 40. Die Führungsbahnen 39, 40 sind im wesentlichen U-förmig ausgebildet. Die U-Führungen sind einander zugewandt. Die untere Führungsbahn 39 ist mit dem oberen Ende der unteren Innenverkleidung 31 verbunden, und zwar an deren Innenseite. Die obere Führungsbahn 40 ist mit der oberen Innenverkleidung 30 im Bereich von deren unterem Ende verbunden, und zwar ebenfalls an deren Innenseite. Die Führungsbahnen 39, 40 können mit den Innenverkleidungen 31, 30 verklebt sein. Sie können dort allerdings auch lösbar befestigt sein.

Die Abdeckung 36 weist ferner eine Verzahnung 41 auf, die sich zwischen den Endstücken 37, 38 befindet. Die Verzahnung 41 besteht aus vertikal verlaufenden Zähnen, die in eine entsprechende Verzahnung eingreifen, die an dem Gleitschlitten 4 vorgesehen ist. Auf diese Weise ist die Abdeckung 36 mit dem Gleitschlitten 4 lösbar verbunden.

Die Fahrzeugtüre 1 kann auf einfache Weise montiert werden. Zunächst werden die Führungsschiene 3 und der Gleitschlitten 4 montiert. Ferner werden die Führungsbahnen 39, 40 mit der Abdeckung 36 an der Innenverkleidung 27, 30, 31 montiert. Anschließend kann die aus der Innenverkleidung 27, 30, 31 und den Führungsbahnen 39, 40 sowie der Abdeckung 36 bestehende Baugruppe montiert werden, wobei die Verzahnung 41 der Abdeckung 36 in die entsprechende Verzahnung an dem Gleitschlitten 4 eingreift, wodurch die Verbindung zwischen Abdeckung 36 und Gleitschlitten 4 hergestellt wird.

Anstelle der Verzahnung 41 kann auch ein anderes Adapterstück verwendet werden, das eine lösbare oder nicht lösbare Verbindung mit dem Gleitschlitten 4 herstellt, wobei der Gleitschlitten 4 ein entsprechendes Adapterstück aufweisen kann.

Im Ausführungsbeispiel sind die Führungsbahnen 39, 40 an der Innenverkleidung 27, 30, 31 befestigt. Die Führungsbahnen 39, 40 können allerdings auch anderweitig, insbesondere an der Führungsschiene 3 befestigt werden und somit von der Innenverkleidung 27, 30, 31 losgelöst sein (in der Zeichnung nicht dargestellt). Hierdurch wird ein modularer Aufbau der aus Führungsschiene 3 und Gleitschlitten 4 bestehenden Antriebseinheit ermöglicht.

Die Führungsbahnen 39, 40 können aus Kunststoff hergestellt sein. Es ist aber auch möglich, andere Materialien zu verwenden, insbesondere Aluminium oder Stahl. Die Führungsbahnen 39, 40 sind dann vorzugsweise aus einem Aluminium-oder Stahl-Profil hergestellt.

Durch eine lineare Bewegung des Gleitschlittens 4 wird die als Jalousie ausgebildete Abdeckung 36 über die Führungsbahnen 39, 40 zwangsgeführt, und zwar im Innenbereich 10' der Türstruktur der Schiebetüre 1.

Durch die Erfindung wird die Erzeugung einer homogenen Türinnenverkleidung ermöglicht, und zwar durch Verschließen des Freiraums vor der Führungsschiene mittels einer integrierten Abdeckung. Weiterhin kann durch die Abdeckung ein Einklemmschutz erzielt werden, da ein freier Zugriff auf die Mechanik nicht mehr möglich ist. Dementsprechend kann durch die Erfindung ein Sichtschutz, ein Einklemmschutz und eine optische Anpassung erzielt werden.

## Patentansprüche

1. Schiebetüre für ein Fahrzeug, die an ihrer Innenseite eine Führungsschiene (3) aufweist, die in einem Gleitschlitten (4) längsverschieblich gelagert ist, wobei eine Abdeckung (36) für die Führungsschiene (3) vorgesehen ist, die als Jalousie oder Rollo ausgebildet ist und die mit dem Gleitschlitten (4) verbunden ist,
**dadurch gekennzeichnet,**
**daß** die Abdeckung (36) eine Verzahnung (41) aufweist, die in eine entsprechende Verzahnung an dem Gleitschlitten (4) eingreift.

2. Schiebetüre nach Anspruch 1, **dadurch gekennzeichnet, daß** die Abdeckung (36) aus Kunststoff hergestellt ist.

3. Schiebetüre nach einem der vorhergehenden Ansprüche, **dadurch gekennzeichnet, daß** die Abdeckung (36) in Führungen (39, 40) geführt ist.

4. Schiebetüre nach Anspruch 3, **dadurch gekennzeichnet, daß** die Führungen (39, 40) an der Innenverkleidung (30, 31) der Schiebetüre (1) befestigt sind.

5. Schiebetüre nach einem der vorhergehenden Ansprüche, **gekennzeichnet durch** einen Motor (16) zum Antrieb der Führungsschiene (3).

6. Schiebetüre nach einem der vorhergehenden Ansprüche, **dadurch gekennzeichnet, daß** der Gleitschlitten (4) an einem Scharnierbügel (5) schwenkbar (9) gelagert ist, der an dem Fahrzeug schwenkbar (8) gelagert ist.

7. Schiebetüre nach Anspruch 6, **gekennzeichnet durch** einen Motor (10) zum Antrieb des Scharnierbügels (5).

8. Schiebetüre nach einem der vorhergehenden Ansprüche, **dadurch gekennzeichnet, daß** die Schiebetüre (1) an dem dem Scharnierbügel (5) abgewandten Ende an dem Fahrzeug arretierbar ist.

9. Fahrzeug, insbesondere Kraftfahrzeug, **gekennzeichnet durch** eine Schiebetüre (1) nach einem der Ansprüche 1 bis 8.

## Claims

1. Sliding door for a vehicle, the inside of which sliding door has a guide rail (3) which is mounted in a longitudinally displaceable manner in a sliding carriage (4), wherein a cover (36) is provided for the guide rail (3), said cover being designed as a blind or roller blind and being connected to the sliding carriage (4), **characterized in that** the cover (36) has a toothing (41) which engages in a corresponding toothing on the sliding carriage (4).

2. Sliding door according to Claim 1, **characterized in that** the cover (36) is produced from plastic.

3. Sliding door according to one of the preceding claims, **characterized in that** the cover (36) is guided in guides (39, 40).

4. Sliding door according to Claim 3, **characterized in that** the guides (39, 40) are fastened to the inner panel (30, 31) of the sliding door (1).

5. Sliding door according to one of the preceding claims, **characterized by** a motor (16) for driving the guide rail (3).

6. Sliding door according to one of the preceding claims, **characterized in that** the sliding carriage (4) is mounted pivotably (9) on a hinge bracket (5) which is mounted pivotably (8) on the vehicle.

7. Sliding door according to Claim 6, **characterized by** a motor (10) for driving the hinge bracket (5).

8. Sliding door according to one of the preceding claims, **characterized in that** the sliding door (1) can be locked on the vehicle at the end facing away from the hinge bracket (5).

9. Vehicle, in particular motor vehicle, **characterized by** a sliding door (1) according to one of Claims 1 to 8.

## Revendications

1. Porte coulissante pour un véhicule, qui présente à son côté intérieur un rail de guidage (3) qui est logé dans un chariot de glissement (4) d'une manière déplaçable longitudinalement, où est prévu un recouvrement (36) pour le rail de guidage (3), qui est réalisé sous forme de jalousie ou store et qui est relié au chariot de glissement (4), **caractérisée en ce que** le recouvrement (36) présente une denture (41) qui s'engage dans une denture correspondante au chariot de glissement (4).

2. Porte coulissante selon la revendication 1, **caractérisée en ce que** le recouvrement (36) est réalisé en matériau synthétique.

3. Porte coulissante selon l'une des revendications précédentes, **caractérisée en ce que** le recouvrement (36) est guidé dans des guidages (39, 40).

4. Porte coulissante selon la revendication 3, **caractérisée en ce que** les guidages (39, 40) sont fixés à l'habillage intérieur (30, 31) de la porte coulissante (1).

5. Porte coulissante selon l'une des revendications précédentes, **caractérisée par** un moteur (16) pour l'entraînement du rail de guidage (3).

6. Porte coulissante selon l'une des revendications précédentes, **caractérisée en ce que** le chariot de glissement (3) est logé d'une manière pivotante (9) à un étrier de charnière (5) qui est logé d'une manière pivotante (8) au véhicule.

7. Porte coulissante selon la revendication 6, **caractérisée par** un moteur (10) pour l'entraînement de l'étrier de charnière (5).

8. Porte coulissante selon l'une des revendications précédentes, **caractérisée en ce que** la porte coulissante (1) peut être arrêtée à l'extrémité éloignée de l'étrier de charnière (5) au véhicule.

9. Véhicule, en particulier véhicule à moteur, **caractérisé par** une porte coulissante (1) selon l'une des revendications 1 à 8.
